(19) Europäisches Patentamt
European Patent Office
Office européen des brevets

(11) **EP 4 746 578 A2**

(12) **EUROPEAN PATENT APPLICATION**

(43) Date of publication:
**20.05.2026  Bulletin 2026/21**

(21) Application number: **26167620.9**

(22) Date of filing: **02.02.2024**

(51) International Patent Classification (IPC):
***H04W 76/20*** *(2018.01)*

(52) Cooperative Patent Classification (CPC):
**H04B 7/0404; H04B 7/0408; H04B 7/0678;**
H04L 5/0042; H04L 5/0094; H04W 76/11;
H04W 76/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **15.02.2023   US 202363485054 P**

(62) Document number(s) of the earlier application(s) in accordance with Art. 76 EPC:
**24711016.6 / 4 666 407**

(71) Applicant: **Apple Inc.**
**Cupertino, CA 95014 (US)**

(72) Inventors:
• **SUN, Haitong**
**Sunnyvale, 94085 (US)**
• **BHAMRI, Ankit**
**85579 Munich Bavaria-Bayern (DE)**

• **YE, Chunxuan**
**San Diego, 92121 (US)**
• **YE, Sigen**
**San Diego, 92121 (US)**
• **ZHANG, Dawei**
**Sunnyvale, 94085 (US)**
• **ZENG, Wei**
**Sunnyvale, 94085 (US)**

(74) Representative: **Zacco Denmark A/S**
**Arne Jacobsens Allé 15**
**2300 Copenhagen S (DK)**

Remarks:
This application was filed on 25.03.2026 as a divisional application to the application mentioned under INID code 62.

(54) **METHODS AND APPARATUS TO SUPPORT TWO CODEWORDS FOR UL MIMO**

(57)    Apparatus and methods are provided for selectively using multiple codewords for uplink (UL) multiple-input multiple-output (MIMO) communication. A user equipment (UE) is configured to use at least one of a first codeword and a second codeword for UL communication with a base station. The UE determines whether to enable or disable the second codeword for a physical uplink shared channel (PUSCH) transmission. In response to determining to disable the second codeword, the UE transmits the PUSCH transmission including the first codeword to the base station. In response to determining to enable the second codeword, the UE transmits the PUSCH transmission including the first codeword and the second codeword to the base station.

FIG. 3

**Description**

TECHNICAL FIELD

This application relates generally to wireless communication systems, including uplink (UL) multiple-input multiple-output (MIMO) operation.

BACKGROUND

Wireless mobile communication technology uses various standards and protocols to transmit data between a base station and a wireless communication device. Wireless communication system standards and protocols can include, for example, 3rd Generation Partnership Project (3GPP) long term evolution (LTE) (e.g., 4G), 3GPP new radio (NR) (e.g., 5G), and IEEE 802.11 standard for wireless local area networks (WLAN) (commonly known to industry groups as Wi-Fi®).
As contemplated by the 3GPP, different wireless communication systems standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, global system for mobile communications (GSM), enhanced data rates for GSM evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).
Each RAN may use one or more radio access technologies (RATs) to perform communication between the base station and the UE. For example, the GERAN implements GSM and/or EDGE RAT, the UTRAN implements universal mobile telecommunication system (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In certain deployments, the E-UTRAN may also implement NR RAT. In certain deployments, NG-RAN may also implement LTE RAT.
A base station used by a RAN may correspond to that RAN. One example of an E-UTRAN base station is an Evolved Universal Terrestrial Radio Access Network (E-UTRAN) Node B (also commonly denoted as evolved Node B, enhanced Node B, eNodeB, or eNB). One example of an NG-RAN base station is a next generation Node B (also sometimes referred to as a g Node B or gNB).
A RAN provides its communication services with external entities through its connection to a core network (CN). For example, E-UTRAN may utilize an Evolved Packet Core (EPC), while NG-RAN may utilize a 5G Core Network (5GC).

BRIEF DESCRIPTION OF THE SEVERAL VIEWS OF THE DRAWINGS

To easily identify the discussion of any particular element or act, the most significant digit or digits in a reference number refer to the figure number in which that element is first introduced.

FIG. 1 illustrates an example table for encoding of 1-bit information that may be used with certain embodiments.

FIG. 2 illustrates an example for encoding of 2-bit information that may be used with certain embodiments.

FIG. 3 is a flowchart illustrating a method for a UE configured to use at least one of a first codeword and a second codeword for uplink communication with a base station according to one embodiment.

FIG. 4 is a method for a base station to process a PUSCH transmission received from a UE according to one embodiment.

FIG. 5 illustrates an example architecture of a wireless communication system, according to embodiments disclosed herein.

FIG. 6 illustrates a system for performing signaling between a wireless device and a network device, according to embodiments disclosed herein.

DETAILED DESCRIPTION

Various embodiments are described with regard to a UE. However, reference to a UE is merely provided for illustrative purposes. The example embodiments may be utilized with any electronic component that may establish a connection to a network and is configured with the hardware, software, and/or firmware to exchange information and data with the network. Therefore, the UE as described herein is used to represent any appropriate electronic component.

For UL MIMO operation, certain wireless networks support at least one of codebook based physical uplink shared channel (PUSCH) operation and non-codebook based PUSCH operation. In codebook based PUSCH operation, the precoding and number of layers may be indicated by a "precoding information and number of layers" field in scheduling downlink control information (DCI). The possible precoding may be indicated, for example, in a transmit precoding matrix indicator (TPMI). See, for example, 3GPP Technical Specification (TS) 38.212. Codebook UL MIMO operation may also support three different coherency modes, including non-coherent (e.g., codebookSubset = nonCoherent), partial-coherent (e.g., codebookSubset = partialAndNonCoherent), and full-coherent (e.g., codebookSubset = fullyAndPartialAndNonCoherent). In non-codebook based PUSCH operation, the precoding and number of layers may be indicated by a sounding reference signal (SRS) resource indicator (SRI) field in the scheduling DCI.

Certain wireless networks only support UL MIMO operation using up to four UL transmissions (Tx) and up to four layer PUSCH operation. Thus, such wireless systems support only a single codeword for PUSCH. For eight Tx UL operation supporting up to eight layer PUSCH, a single codeword may not be sufficient for the PUSCH transmission. Thus, it would be useful for UL Tx with rank > 4 (e.g., eight Tx UL operation) to use two codewords.

The PUSCH transmits UL data (e.g., a UL shared channel transport block) from a UE to a base station. Processing at a physical layer (PHY) include, for example, segmenting a transport block into code blocks, appending a cyclic redundancy check (CRC) to the code blocks, encoding the code blocks (e.g., using a low-density parity check (LDPC) encoder), rate matching the code blocks after the encoding process, and concatenating the code blocks to form codewords for transmission over the PUSCH. According to embodiments disclosed herein, up to two codewords may transmitted simultaneously on a single PUSCH channel. For example, a single codeword may be used for one to four layers and two codewords may be used for five to eight layers. The codewords are scrambled and modulated to generate complex data symbols before layer mapping. The modulated data symbols may be mapped to either four or eight layers. The layers are mapped with the number of antenna ports reserved for PUSCH use and complex modulated data symbols are mapped to resource blocks (RBs) in a resource grid (i.e., time and frequency resources), as per subcarrier spacing.

Example PUSCH Scrambling

Scrambling the codewords includes using a scrambling sequence to randomize interference that arises between transmissions. When a receiving device (e.g. a base station) descrambles a received bitstream with a known scrambling sequence, interference from other transmissions are descrambled incorrectly and therefore only appear as uncorrelated noise. The scrambling process may use an input bit sequence to carry out a bit-wise XOR operation with a cell specified pseudorandom sequence generated by length-31 Gold sequence generator. The input bit sequence is the block of bits within the codeword and the output bit sequence is the scrambled sequence with the same length as the input sequence. The scrambling sequence may be initialized using an initial scrambling code.

By way of example, for PUSCH scrambling of a single codeword corresponding to a codeword index q = 0, a block of bits may be represented by $b^{(q)}(0), \dots, b^{(q)}(M_{bit}^{(q)} - 1)$, where $M_{bit}^{(q)}$ is the number of bits in codeword q transmitted on the physical channel that is scrambled prior to modulation, resulting in a block of scrambled bits $\tilde{b}^{(q)}(0), \dots, \tilde{b}^{(q)}(M_{bit}^{(q)} - 1)$ according to the following pseudo code:

$$\text{Set } i = 0$$

$$\text{while } i < M_{bit}^{(q)}$$

$$\text{if } b^{(q)}(i) = x \quad // \text{ UCI placeholder bits}$$

$$\tilde{b}^{(q)}(i) = 1$$

$$\text{else}$$

$$\text{if } b^{(q)}(i) = y \quad // \text{ UCI placeholder bits}$$

$$\tilde{b}^{(q)}(i) = \tilde{b}^{(q)}(i-1)$$

$$\text{else}$$

$$\tilde{b}^{(q)}(i) = \left( b^{(q)}(i) + c^{(q)}(i) \right) mod2$$

$$\text{end if}$$

$$\text{end if}$$

$$i = i + 1$$

$$\text{end while}$$

where x and y are tags (see, e.g., 3GPP TS 38.212), and where $c^{(q)}(i)$ is the scrambling sequence (see, e.g., clause 5.2.1 of 3GPP TS 38.211). The scrambling sequence generator may be initialized with:

$$c_{init} = \begin{cases} n_{RNTI} \cdot 2^{16} + n_{RAPID} \cdot 2^{10} + n_{ID} & for\ msgA\ on\ PUSCH \\ n_{RNTI} \cdot 2^{15} + n_{ID} & otherwise \end{cases}$$

where: $n_{ID} \in \{0,1,......,1023\}$ equals the higher-layer parameter *dataScramblingIdentityPUSCH* if configured and the radio network temporary identifier (RNTI) equals the cell RNTI (C-RNTI), modulation coding scheme (MCS)-C-RNTI, semi-persistent (SP) channel state information (CSI) RNTI, and the transmission is not scheduled using DCI format 0_0 in a common search space; $n_{ID} \in \{0,1,.......,1023\}$ equals the higher-layer parameter *msgA-DataScramblingIndex* if configured and the PUSCH transmission is triggered by a Type-2 random access procedure as described in clause 8.1A of 3GPP TS 38.213; and $n_{ID} = N_{ID}^{cell}$ otherwise. $n_{RAPID}$ is the index of the random-access preamble transmitted for msgA as described in clause 5.1.3A of 3GPP TS 38.321. $n_{RNTI}$ equals the RA-RNTI for msgA and otherwise corresponds to the RNTI associated with the PUSCH transmission as described in clause 6.1 of 3GPP TS 38.214 and clause 8.3 of 3GPP TS 38.213.

Example Channel Coding of Small Block Lengths

Certain wireless systems use a channel coding scheme, which is a combination of error detection, error correcting, rate matching, interleaving, and transport channel or control information mapping onto/splitting from physical channels. For example, uplink control information (UCI) may be multiplexed on PUSCH when channel coding of a small block length (e.g., 1-bit UCI or 2-bit UCI). The bit sequence input for a given code block to channel coding is denoted by $c_0$, $c_1$, $c_2$, $c_3$,..., $c_{K-1}$, where K is the number of bits to encode. After encoding the bits are denoted by $d_0$, $d_1$, $d_2$,..., $d_{N-1}$.

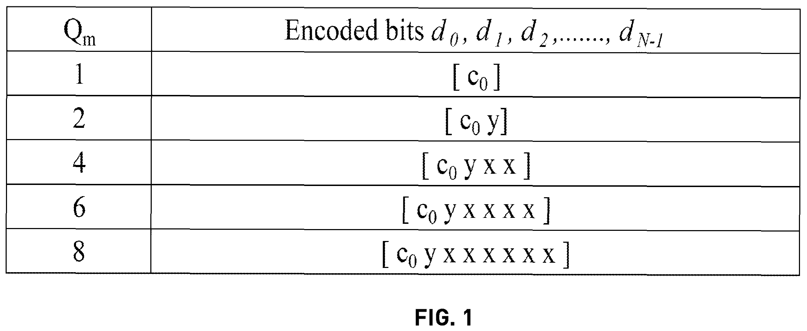

FIG. 1 illustrates an example table for encoding of 1-bit information that may be used with certain embodiments. For K = 1, the code block is encoded according to the example table shown in FIG. 1, where $N = Q_m$ and $Q_m$ is the modulation order for the code block. The "x" and "y" shown in the table are placeholders (see, e.g., clauses 6.3.1.1, 6.3.2.5.1, 6.3.2.6.1 of 3GPP 38.211) to scramble the information bits in a way that maximizes the Euclidean distance of the modulation symbols carrying the information bits.

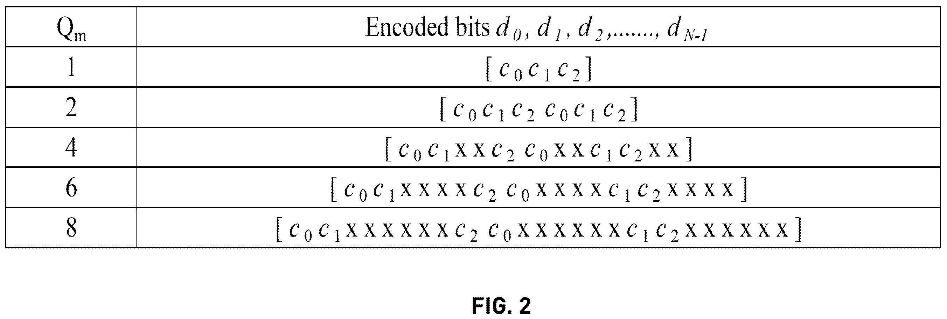

As another example, FIG. 2 illustrates an example for encoding of 2-bit information that may be used with certain embodiments. For K = 2, the code block is encoded according to the example table shown in FIG. 2, where $c_2 = (c_0 + c_1)$ mod2, $N = 3Q_m$, and $Q_m$ is the modulation order for the code block. The "x" in the table is a placeholder (see, e.g., clause 6.3.1.1 of 3GPP TS 38.211) to scramble the information bits in a way that maximizes the Euclidean distance of the modulation symbols carrying the information bits.

Example PUSCH Scrambling Embodiments

In one embodiment, 2-codeword (CW) PUSCH operation is not applicable to a msgA on the PUSCH in a 2-step random access channel (RACH) procedure. Skilled persons will recognize from the disclosure herein that the msgA in a 2-step RACH procedure corresponds to message (preamble and data) from the UE to the base station. Thus, in this embodiment, the UE uses only a single codeword (or disables the second codeword) when including the msgA on the PUSCH. Similarly, the base station expects to receive the msgA on the PUSCH in a single codeword.

In addition, or in other embodiments for 2-codeword PUSCH operation, a first codeword is scrambled with a PUSCH scrambling sequence initialized based on a codeword index (q), where q = 0 is a first codeword index value associated with the first codeword and q = 1 is a second codeword index value associated with the second codeword.

For example, for $q^{th}$, q = 0, 1, a PUSCH scrambling sequence $c^{(q)}(i)$ is initiated by $c_{init} = n_{RNTI} \cdot 2^{15} + q \cdot 2^{14} + n_{ID}$, where (i) is a bit index ranging from zero to a number of bits in the first codeword or the second codeword, $n_{RNTI}$ is an RNTI associated with the PUSCH transmission, and $n_{ID}$ comprises: a higher layer parameter dataScramblingIdentityPUSCH in a PUSCH configuration information element (IE) from the base station if configured and the RNTI equals the C-RNTI, MCS-C-RNTI, SP-CSI-RNTI or configured scheduling (CS)-RNTI, and the transmission is not scheduled using DCI format 0_0 in a common search space; or a cell identity (ID). For the first codeword (i.e., q = 0), the corresponding PUSCH scrambling sequence $c^{(0)}(i)$ is initiated by $c_{init} = n_{RNTI} \cdot 2^{15} + n_{ID}$. For the second codeword (i.e., q = 1), the corresponding PUSCH scrambling sequence $c^{(1)}(i)$ is initiated by $c_{init} = n_{RNTI} \cdot 2^{15} + 2^{14} + n_{ID}$.

In another example, for $q^{th}$, q = 0, 1, the PUSCH scrambling sequence $c^{(q)}(i)$ is initiated by $c_{init} = n_{RNTI} \cdot 2^{15} + q \cdot 2^{10} + n_{ID}$. For the first codeword (i.e., q = 0), the corresponding PUSCH scrambling sequence $c^{(0)}(i)$ is initiated by $c_{init} = n_{RNTI} \cdot 2^{15} + n_{ID}$. For the second codeword (i.e., q = 1), the corresponding PUSCH scrambling sequence $c^{(1)}(i)$ is initiated by $c_{init} = n_{RNTI} \cdot 2^{15} + 2^{10} + n_{ID}$.

In another embodiment, 2-CW PUSCH operation uses an additional higher layer parameter dataScramblingIdentityPUSCH in the PUSCH configuration (PUSCH-Config). For example, for the first codeword (i.e., q = 0), the corresponding PUSCH scrambling sequence $c^{(0)}(i)$ is initiated by $c_{init} = n_{RNTI} \cdot 2^{15} + n_{ID}$, with $n_{ID}$ as the legacy higher layer parameter dataScramblingIdentityPUSCH. For the second codeword (i.e., q = 1), the corresponding PUSCH scrambling sequence $c^{(1)}(i)$ is initiated by $c_{init} = n_{RNTI} \cdot 2^{15} + n_{ID}$, with $n_{ID}$ as the additional higher layer parameter dataScramblingIdentityPUSCH.

In another embodiment, for 2-CW PUSCH operation, the same PUSCH scrambling sequence is used for both codewords. For example, the PUSCH scrambling sequence $c^{(q)}(i)$ may be initiated by $c_{init} = n_{RNTI} \cdot 2^{15} + n_{ID}$ for the first codeword and the second codeword.

In certain embodiments, for 2-CW PUSCH operation wherein UCI is multiplexed on the PUSCH for channel coding of small block length using 1-bit UCI, the 1-bit UCI is only multiplexed on one codeword. For example, the UE may select the codeword with the largest MCS or transport block size for the 1-bit UCI. Alternatively, the UE may be configured to select only the first codeword for the 1-bit UCI, or only the second codeword for the 1-bit UCI. In another embodiment, the UE multiplexes the same 1-bit UCI on each codeword. In either case, the UE may be configured to use the table shown in FIG. 1, for example, for encoding of 1-bit information.

In certain embodiments, for 2-CW PUSCH operation wherein UCI is multiplexed on the PUSCH for channel coding of small block length using 2-bit UCI (i.e., $\{c_0, c_1\}$), the 2-bit UCI is only multiplexed on one codeword. For example, the UE may select the codeword with the largest MCS or transport block size for the 2-bit UCI. Alternatively, the UE may be configured to select only the first codeword for the 2-bit UCI, or only the second codeword for the 2-bit UCI. In another embodiment, the UE multiplexes the same 2-bit UCI on each codeword. In either case, the UE may be configured to use the table shown in FIG. 2, for example, for encoding of 2-bit information.

In certain embodiments, for 2-CW PUSCH operation wherein UCI is multiplexed on the PUSCH for channel coding of small block length using 2-bit UCI (i.e., $\{c_0, c_1\}$), a first bit ((i.e., $\{c_0\}$) of the 2-bit UCI is multiplexed on the first codeword and a second bit (i.e., $\{c_1\}$) of the 2-bit UCI is multiplexed on the second codeword. In one such embodiment, for each codeword, a 1-bit UCI encoding scheme is used for both bits. For example, the UE may be configured to use the table shown in FIG. 1 for encoding of 1-bit information to encode the first bit ((i.e., $\{c_0\}$) of the 2-bit UCI on the first codeword and to encode the second bit ((i.e., $\{c_1\}$) of the 2-bit UCI on the second codeword.

Example Embodiments for Enabling/Disabling of Second Codeword

In certain embodiments, the UE is configured to selectively enable or disable the second codeword for PUSCH operation. In certain such embodiments, when the number of PUSCH layers is <=4 the second CW is disabled, and when the number of PUSCH layers is >4 the second CW is enabled.

In one embodiment for codebook based PUSCH operation, for example, the UE enables or disables the second codeword based on the number of PUSCH layers scheduled by a "precoding information and number of layers" field in the scheduling DCI or by a "precodingAndNumberOfLayers" in the RRC for Type I configured grant (CG) PUSCH. In another example embodiment for non-codebook based PUSCH operation, the UE enables or disables the second codeword based on the number of PUSCH layers scheduled by an "SRS resource indicator" field in the scheduling DCI or by an "srs-ResourceIndicator" in the RRC for Type I CG PUSCH.

In one embodiment for dynamic grant (DG) PUSCH and Type II CG PUSCH, the UE enables and disables the second codeword based on a new 1-bit field communicated from the base station to the UE in DCI format 0_1 and/or 0_2 for disabling and/or enabling the second CW. In another embodiment for Type I CG PUSCH, the UE enables and disables the second codeword based on a new 1-bit field in a configured grant configuration RRC message (ConfiguredGrantConfig).

In one embodiment for 2-CW PUSCH operation, the second codeword is enabled and disabled based on one or both of a special MCS index for the second codeword and/or a special redundancy version (RV) for the second codeword. For example, the UE may disable the second codeword when the second codeword is scheduled with MCS index = 26 and RV = 1. As another example, the UE may disable the second codeword when the second codeword is scheduled with MCS index = 26 and RV = 2.

Example Processes

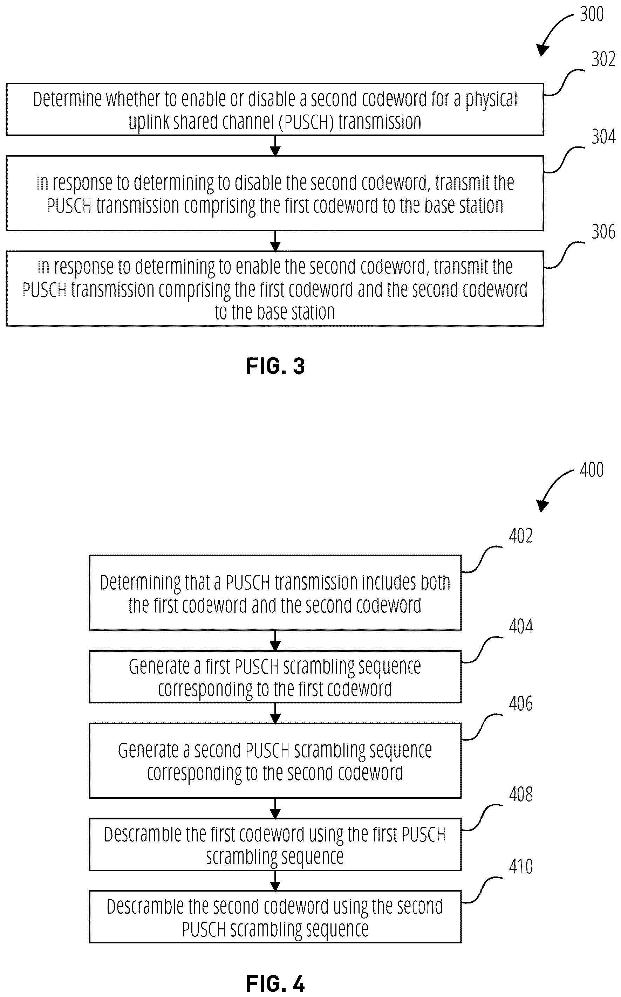

FIG. 3 is a flowchart illustrating a method 300 for a UE configured to use at least one of a first codeword and a second codeword for uplink communication with a base station according to one embodiment. The method 300 includes determining 302 whether to enable or disable a second codeword for a PUSCH transmission. In response to determining to disable the second codeword, the method 300 includes transmitting 304 the PUSCH transmission comprising the first codeword to the base station. In response to determining to enable the second codeword, the method 300 includes transmitting 306 the PUSCH transmission comprising the first codeword and the second codeword to the base station.

In one embodiment of the method 300, determining whether to enable or disable the second codeword comprises, in response to determining that the PUSCH transmission comprises a MsgA in 2-Step RACH procedure, disabling the second codeword.

In one embodiment of the method 300, the first codeword is scrambled with a PUSCH scrambling sequence initialized using a first codeword index value and the second codeword is scrambled with the PUSCH scrambling sequence initialized using a second codeword index value. In one such embodiment, the PUSCH scrambling sequence comprises $c^{(q)}(i)$, wherein (q) is a codeword index where q = 0 is the first codeword index value associated with the first codeword and q = 1 is the second codeword index value associated with the second codeword, wherein (i) is a bit index ranging from zero to a number of bits in the first codeword or the second codeword, and wherein the PUSCH scrambling sequence is initialized by an initial scrambling code $c_{init}$ based on: a radio network temporary identifier $n_{RNTI}$ of the UE associated with the PUSCH transmission; and an identity $n_{ID}$ comprising a cell identity or a higher layer parameter *dataScramblingIdentityPUSCH* in a PUSCH configuration IE from the base station.

In certain embodiments, $c_{init} = n_{RNTI} \cdot 2^{15} + q \cdot 2^{14} + n_{ID}$, wherein for the first codeword, q = 0 and the PUSCH scrambling sequence is initiated by $c_{init} = n_{RNTI} \cdot 2^{15} + n_{ID}$, and wherein for the second codeword, q = 1 and the PUSCH scrambling sequence is initiated by $c_{init} = n_{RNTI} \cdot 2^{15} + 2^{14} + n_{ID}$.

In certain embodiments, $c_{init} = n_{RNTI} \cdot 2^{15} + q \cdot 2^{10} + n_{ID}$, wherein for the first codeword, q = 0 and the PUSCH scrambling sequence is initiated by $c_{init} = n_{RNTI} \cdot 2^{15} + n_{ID}$, and wherein for the second codeword, q = 1 and the PUSCH scrambling sequence is initiated by $c_{init} = n_{RNTI} \cdot 2^{15} + 2^{10} + n_{ID}$.

In one embodiment of the method 300, the first codeword and the second codeword are scrambled with a PUSCH scrambling sequence comprising $c^{(q)}(i)$, wherein (q) is a codeword index where q = 0 is a first codeword index value associated with the first codeword and q = 1 is a second codeword index value associated with the second codeword, wherein (i) is a bit index ranging from zero to a number of bits in the first codeword or the second codeword, and wherein the PUSCH scrambling sequence is initialized by an initial scrambling code comprising $c_{init} = n_{RNTI} \cdot 2^{15} + n_{ID}$, where $n_{RNTI}$ is a RNTI of the UE associated with the PUSCH transmission, and where: for the first codeword, $n_{ID}$ comprises a first higher layer parameter *dataScramblingIdentityPUSCH* in a PUSCH configuration IE from the base station, for the second codeword, $n_{ID}$ comprises a second higher layer parameter *dataScramblingIdentityPUSCH* in the PUSCH configuration IE from the base station, wherein the first higher layer parameter *dataScramblingIdentityPUSCH* is configured independently from the second higher layer parameter *dataScramblingIdentityPUSCH*.

In one embodiment of the method 300, the first codeword and the second codeword are scrambled with a PUSCH scrambling sequence comprising $c^{(q)}(i)$, wherein (q) is a codeword index where q = 0 is a first codeword index value associated with the first codeword and q = 1 is a second codeword index value associated with the second codeword, wherein (i) is a bit index ranging from zero to a number of bits in the first codeword or the second codeword, wherein the PUSCH scrambling sequence for both the first codeword and the second codeword is initialized by an initial scrambling code comprising $c_{init} = n_{RNTI} \cdot 2^{15} + n_{ID}$, where $n_{RNTI}$ is a RNTI of the UE associated with the PUSCH transmission, and

where n$_{ID}$ comprising a cell identity or a higher layer parameter *dataScramblingIdentityPUSCH* in a PUSCH configuration IE from the base station.

In one embodiment, the method 300 further comprises, when encoding 1-bit information or 2-bit information for channel coding, selecting between either the first codeword or the second codeword to multiplex UCI on the PUSCH transmission. In one such embodiment, selecting between either the first codeword or the second codeword is based on a largest MCS used for the first codeword or the second codeword. In another embodiment, selecting between either the first codeword or the second codeword comprises being preconfigured to select the first codeword.

In one embodiment, the method 300 further comprises, when encoding 1-bit information for channel coding, multiplexing a same 1-bit UCI on both the first codeword and the second codeword.

In one embodiment, the method 300 further comprises, when encoding 2-bit information for channel coding, multiplexing a same 2-bit UCI on both the first codeword and the second codeword.

In one embodiment, the method 300 further comprises, when encoding 2-bit information for channel coding, multiplexing a first bit of UCI on the first codeword and multiplexing a second bit of the UCI on the second codeword. One such embodiment further comprises: for the first codeword, using a 1-bit information encoding table to encode the first bit; and for the second codeword, using the same 1-bit information encoding table to encode the second bit.

In one embodiment of the method 300, determining whether to enable or disable the second codeword is based on a number of PUSCH layers scheduled by scheduling DCI or an RRC signal for Type I CG PUSCH. In one such embodiment, for codebook based PUSCH operation, the number of scheduled PUSCH layers is scheduled by a precoding information and number of layers field in the scheduling DCI or a precodingAndNumberOfLayers field in the RRC signal; and for non-codebook based PUSCH operation, the number of scheduled PUSCH layers is scheduled by an SRS resource indicator field in the scheduling DCI or an srs-ResourceIndicator field in the RRC signal. In another embodiment, the embodiment further comprises: when the number of PUSCH layers is less than or equal to four, disabling the second codeword; and when the number of PUSCH layers is greater than four, enabling the second codeword.

In one embodiment of the method 300, determining whether to enable or disable the second codeword is based on a 1-bit field communicated from the base station to the UE. In one such embodiment, for DG PUSCH or Type II CG PUSCH, DCI format 0_1 or DCI format 0_2 includes the 1-bit field; and for Type I CG PUSCH, a configured grant configuration message in a RRC signal includes the 1-bit field.

In one embodiment of the method 300, determining whether to enable or disable the second codeword is based on at least one of: an MCS index for the second codeword; and an RV for the second codeword.

Embodiments contemplated herein include an apparatus comprising means to perform one or more elements of the method 300. This apparatus may be, for example, an apparatus of a UE (such as a wireless device 602 that is a UE, as described herein).

Embodiments contemplated herein include one or more non-transitory computer-readable media comprising instructions to cause an electronic device, upon execution of the instructions by one or more processors of the electronic device, to perform one or more elements of the method 300. This non-transitory computer-readable media may be, for example, a memory of a UE (such as a memory 606 of a wireless device 602 that is a UE, as described herein).

Embodiments contemplated herein include an apparatus comprising logic, modules, or circuitry to perform one or more elements of the method 300. This apparatus may be, for example, an apparatus of a UE (such as a wireless device 602 that is a UE, as described herein).

Embodiments contemplated herein include an apparatus comprising: one or more processors and one or more computer-readable media comprising instructions that, when executed by the one or more processors, cause the one or more processors to perform one or more elements of the method 300. This apparatus may be, for example, an apparatus of a UE (such as a wireless device 602 that is a UE, as described herein).

Embodiments contemplated herein include a signal as described in or related to one or more elements of the method 300.

Embodiments contemplated herein include a computer program or computer program product comprising instructions, wherein execution of the program by a processor is to cause the processor to carry out one or more elements of the method 300. The processor may be a processor of a UE (such as a processor(s) 604 of a wireless device 602 that is a UE, as described herein). These instructions may be, for example, located in the processor and/or on a memory of the UE (such as a memory 606 of a wireless device 602 that is a UE, as described herein).

FIG. 4 is a method 400 for a base station to process a PUSCH transmission received from a UE according to one embodiment. The method 400 includes determining 402 that a PUSCH transmission includes both a first codeword and a second codeword. In response to determining 402 that the PUSCH transmission includes both the first codeword and the second codeword, the method 400 further includes generating 404 a first PUSCH scrambling sequence corresponding to the first codeword, generating 406 a second PUSCH scrambling sequence corresponding to the second codeword, descrambling 408 the first codeword using the first PUSCH scrambling sequence, and descrambling 410 the second codeword using the second PUSCH scrambling sequence.

In one embodiment, the method 400 further comprises, in response to determining that the PUSCH transmission comprises a MsgA in 2-Step RACH procedure, determining that the second codeword is disabled.

In one embodiment of the method 400, the first PUSCH scrambling sequence is initialized using a first codeword index value and the second PUSCH scrambling sequence is initialized using a second codeword index value. In one such embodiment, the first PUSCH scrambling sequence and the second PUSCH scrambling sequence are based on $c^{(q)}(i)$, wherein (q) is a codeword index where $q = 0$ is the first codeword index value associated with the first codeword and $q = 1$ is the second codeword index value associated with the second codeword, wherein (i) is a bit index ranging from zero to a number of bits in the first codeword or the second codeword, and wherein the first PUSCH scrambling sequence and the second PUSCH scrambling sequence are initialized by an initial scrambling code $c_{init}$ based on: a radio network temporary identifier $n_{RNTI}$ of the UE associated with the PUSCH transmission; and an identity $n_{ID}$ comprising a cell identity or a higher layer parameter *dataScramblingIdentityPUSCH* in a PUSCH configuration IE from the base station to the UE.

In certain embodiments, $c_{init} = n_{RNTI} \cdot 2^{15} + q \cdot 2^{14} + n_{ID}$, wherein for the first codeword, $q = 0$ and the first PUSCH scrambling sequence is initiated by $c_{init} = n_{RNTI} \cdot 2^{15} + n_{ID}$, and wherein for the second codeword, $q = 1$ and the second PUSCH scrambling sequence is initiated by $c_{init} = n_{RNTI} \cdot 2^{15} + 2^{14} + n_{ID}$.

In certain embodiments, $c_{init} = n_{RNTI} \cdot 2^{15} + q \cdot 2^{10} + n_{ID}$, wherein for the first codeword, $q = 0$ and the first PUSCH scrambling sequence is initiated by $c_{init} = n_{RNTI} \cdot 2^{15} + n_{ID}$, and wherein for the second codeword, $q = 1$ and the second PUSCH scrambling sequence is initiated by $c_{init} = n_{RNTI} \cdot 2^{15} + 2^{10} + n_{ID}$.

In one embodiment of the method 400, the first PUSCH scrambling sequence and the second PUSCH scrambling sequence are based on $c^{(q)}(i)$, wherein (q) is a codeword index where $q = 0$ is a first codeword index value associated with the first codeword and $q = 1$ is a second codeword index value associated with the second codeword, wherein (i) is a bit index ranging from zero to a number of bits in the first codeword or the second codeword, and wherein the first PUSCH scrambling sequence and the second PUSCH scrambling sequence are initialized by an initial scrambling code comprising $c_{init} = n_{RNTI} \cdot 2^{15} + n_{ID}$, where $n_{RNTI}$ is a RNTI of the UE associated with the PUSCH transmission, and where: for the first codeword, $n_{ID}$ comprises a first higher layer parameter *dataScramblingIdentityPUSCH* in a PUSCH configuration IE from the base station to the UE, for the second codeword, $n_{ID}$ comprises a second higher layer parameter *dataScramblingIdentityPUSCH* in the PUSCH configuration IE from the base station to the UE, wherein the first higher layer parameter *dataScramblingIdentityPUSCH* is configured independently from the second higher layer parameter *dataScramblingIdentityPUSCH.*

In one embodiment of the method 400, the first PUSCH scrambling sequence and the second PUSCH scrambling sequence are based on $c^{(q)}(i)$, wherein (q) is a codeword index where $q = 0$ is a first codeword index value associated with the first codeword and $q = 1$ is a second codeword index value associated with the second codeword, wherein (i) is a bit index ranging from zero to a number of bits in the first codeword or the second codeword, wherein the first PUSCH scrambling sequence and the second PUSCH scrambling sequence are both initialized by an initial scrambling code comprising $c_{init} = n_{RNTI} \cdot 2^{15} + n_{ID}$, where $n_{RNTI}$ is a RNTI of the UE associated with the PUSCH transmission, and where $n_{ID}$ comprising a cell identity or a higher layer parameter *dataScramblingIdentityPUSCH* in a PUSCH configuration IE from the base station to the UE.

In one embodiment, the method 400 further comprises, for channel coding using encoding of 1-bit information or 2-bit information, selecting between either the first codeword or the second codeword to demultiplex corresponding UCI from the PUSCH transmission. In one such embodiment, selecting between either the first codeword or the second codeword is based on a largest MCS used for the first codeword or the second codeword. In another embodiment, selecting between either the first codeword or the second codeword comprises being preconfigured to select the first codeword.

In one embodiment, the method 400 further comprises, for channel coding using encoding of 1-bit information, demultiplexing a same 1-bit UCI from both the first codeword and the second codeword.

In one embodiment, the method 400 further comprises, for channel coding using encoding of 2-bit information, demultiplexing a same 2-bit UCI from both the first codeword and the second codeword.

In one embodiment, the method 400 further comprises, for channel coding using encoding of 2-bit information, demultiplexing a first bit of UCI from the first codeword and demultiplexing a second bit of the UCI from the second codeword. In one such embodiment, for the first codeword, the first bit is encoded according to a 1-bit information encoding table; and for the second codeword, the second bit is encoded according to the same 1-bit information encoding table.

In one embodiment, the method 400 further comprises determining that the PUSCH transmission includes both the first codeword and the second codeword based on a number of PUSCH layers scheduled by the base station to the UE in scheduling DCI or a RRC signal for Type I CG PUSCH. In one such embodiment, for codebook based PUSCH operation, the number of scheduled PUSCH layers is scheduled by a precoding information and number of layers field in the scheduling DCI or a precodingAndNumberOfLayers field in the RRC signal; and for non-codebook based PUSCH operation, the number of scheduled PUSCH layers is scheduled by an SRS resource indicator field in the scheduling DCI or an srs-ResourceIndicator field in the RRC signal. Another embodiment further includes determining that the PUSCH transmission includes both the first codeword and the second codeword when the number of PUSCH layers is greater than four.

In one embodiment, the method 400 further comprises transmitting a 1-bit field, from the base station to the UE, to indicate that the UE is to include both the first codeword and the second codeword in the PUSCH transmission. In one such embodiment, for DG PUSCH or Type II CG PUSCH, including the 1-bit field in DCI format 0_1 or DCI format 0_2 includes the 1-bit field; and for Type I CG PUSCH, including the 1-bit field in a configured grant configuration message in a RRC signal.

In one embodiment, the method 400 further comprises, to indicate that the UE is to include both the first codeword and the second codeword in the PUSCH transmission, transmitting at least one of an MCS index for the second codeword and an RV for the second codeword to the UE.

Embodiments contemplated herein include an apparatus comprising means to perform one or more elements of the method 400. This apparatus may be, for example, an apparatus of a base station (such as a network device 618 that is a base station, as described herein).

Embodiments contemplated herein include one or more non-transitory computer-readable media comprising instructions to cause an electronic device, upon execution of the instructions by one or more processors of the electronic device, to perform one or more elements of the method 400. This non-transitory computer-readable media may be, for example, a memory of a base station (such as a memory 622 of a network device 618 that is a base station, as described herein).

Embodiments contemplated herein include an apparatus comprising logic, modules, or circuitry to perform one or more elements of the method 400. This apparatus may be, for example, an apparatus of a base station (such as a network device 618 that is a base station, as described herein).

Embodiments contemplated herein include an apparatus comprising: one or more processors and one or more computer-readable media comprising instructions that, when executed by the one or more processors, cause the one or more processors to perform one or more elements of the method 400. This apparatus may be, for example, an apparatus of a base station (such as a network device 618 that is a base station, as described herein).

Embodiments contemplated herein include a signal as described in or related to one or more elements of the method 400.

Embodiments contemplated herein include a computer program or computer program product comprising instructions, wherein execution of the program by a processing element is to cause the processing element to carry out one or more elements of the method 400>. The processor may be a processor of a base station (such as a processor(s) 620 of a network device 618 that is a base station, as described herein). These instructions may be, for example, located in the processor and/or on a memory of the base station (such as a memory 622 of a network device 618 that is a base station, as described herein).

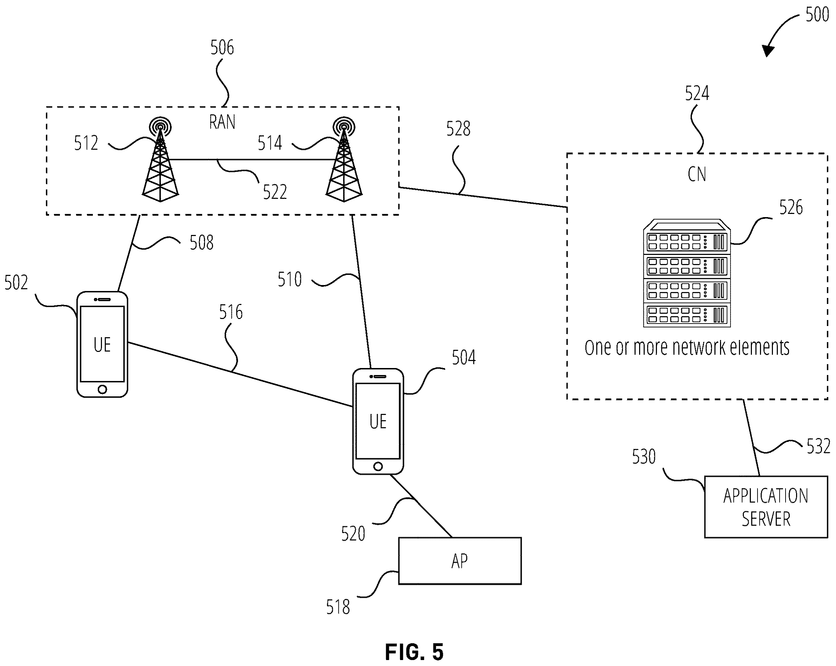

FIG. 5 illustrates an example architecture of a wireless communication system 500, according to embodiments disclosed herein. The following description is provided for an example wireless communication system 500 that operates in conjunction with the LTE system standards and/or 5G or NR system standards as provided by 3GPP technical specifications.

As shown by FIG. 5, the wireless communication system 500 includes UE 502 and UE 504 (although any number of UEs may be used). In this example, the UE 502 and the UE 504 are illustrated as smartphones (e.g., handheld touchscreen mobile computing devices connectable to one or more cellular networks), but may also comprise any mobile or non-mobile computing device configured for wireless communication.

The UE 502 and UE 504 may be configured to communicatively couple with a RAN 506. In embodiments, the RAN 506 may be NG-RAN, E-UTRAN, etc. The UE 502 and UE 504 utilize connections (or channels) (shown as connection 508 and connection 510, respectively) with the RAN 506, each of which comprises a physical communications interface. The RAN 506 can include one or more base stations (such as base station 512 and base station 514) that enable the connection 508 and connection 510.

In this example, the connection 508 and connection 510 are air interfaces to enable such communicative coupling, and may be consistent with RAT(s) used by the RAN 506, such as, for example, an LTE and/or NR.

In some embodiments, the UE 502 and UE 504 may also directly exchange communication data via a sidelink interface 516. The UE 504 is shown to be configured to access an access point (shown as AP 518) via connection 520. By way of example, the connection 520 can comprise a local wireless connection, such as a connection consistent with any IEEE 802.11 protocol, wherein the AP 518 may comprise a Wi-Fi® router. In this example, the AP 518 may be connected to another network (for example, the Internet) without going through a CN 524.

In embodiments, the UE 502 and UE 504 can be configured to communicate using orthogonal frequency division multiplexing (OFDM) communication signals with each other or with the base station 512 and/or the base station 514 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the base station 512 or base station 514 may be implemented as one or more software entities running on server computers as part of a virtual network. In addition, or in other embodiments, the base station 512 or base station 514 may be configured to communicate with one another via interface 522. In embodiments where the wireless communication system 500 is an LTE system (e.g., when the CN 524 is an EPC), the interface 522 may be an X2 interface. The X2 interface may be defined between two or more base stations (e.g., two or more eNBs and the like) that connect to an EPC, and/or between two eNBs connecting to the EPC. In embodiments where the wireless communication system 500 is an NR system (e.g., when CN 524 is a 5GC), the interface 522 may be an Xn interface. The Xn interface is defined between two or more base stations (e.g., two or more gNBs and the like) that connect to 5GC, between a base station 512 (e.g., a gNB) connecting to 5GC and an eNB, and/or between two eNBs connecting to 5GC (e.g., CN 524).

The RAN 506 is shown to be communicatively coupled to the CN 524. The CN 524 may comprise one or more network elements 526, which are configured to offer various data and telecommunications services to customers/subscribers (e.g., users of UE 502 and UE 504) who are connected to the CN 524 via the RAN 506. The components of the CN 524 may be implemented in one physical device or separate physical devices including components to read and execute instructions from a machine-readable or computer-readable medium (e.g., a non-transitory machine-readable storage medium).

In embodiments, the CN 524 may be an EPC, and the RAN 506 may be connected with the CN 524 via an S1 interface 528. In embodiments, the S1 interface 528 may be split into two parts, an S1 user plane (S1-U) interface, which carries traffic data between the base station 512 or base station 514 and a serving gateway (S-GW), and the S1-MME interface, which is a signaling interface between the base station 512 or base station 514 and mobility management entities (MMEs).

In embodiments, the CN 524 may be a 5GC, and the RAN 506 may be connected with the CN 524 via an NG interface 528. In embodiments, the NG interface 528 may be split into two parts, an NG user plane (NG-U) interface, which carries traffic data between the base station 512 or base station 514 and a user plane function (UPF), and the S1 control plane (NG-C) interface, which is a signaling interface between the base station 512 or base station 514 and access and mobility management functions (AMFs).

Generally, an application server 530 may be an element offering applications that use internet protocol (IP) bearer resources with the CN 524 (e.g., packet switched data services). The application server 530 can also be configured to support one or more communication services (e.g., VoIP sessions, group communication sessions, etc.) for the UE 502 and UE 504 via the CN 524. The application server 530 may communicate with the CN 524 through an IP communications interface 532.

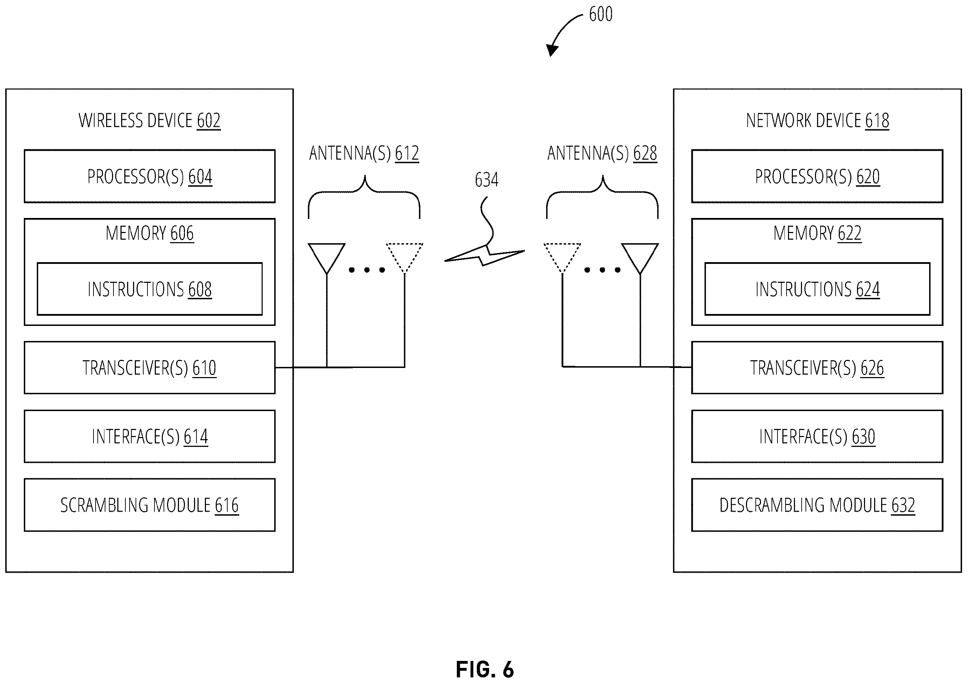

FIG. 6 illustrates a system 600 for performing signaling 634 between a wireless device 602 and a network device 618, according to embodiments disclosed herein. The system 600 may be a portion of a wireless communications system as herein described. The wireless device 602 may be, for example, a UE of a wireless communication system. The network device 618 may be, for example, a base station (e.g., an eNB or a gNB) of a wireless communication system.

The wireless device 602 may include one or more processor(s) 604. The processor(s) 604 may execute instructions such that various operations of the wireless device 602 are performed, as described herein. The processor(s) 604 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The wireless device 602 may include a memory 606. The memory 606 may be a non-transitory computer-readable storage medium that stores instructions 608 (which may include, for example, the instructions being executed by the processor(s) 604). The instructions 608 may also be referred to as program code or a computer program. The memory 606 may also store data used by, and results computed by, the processor(s) 604.

The wireless device 602 may include one or more transceiver(s) 610 that may include radio frequency (RF) transmitter and/or receiver circuitry that use the antenna(s) 612 of the wireless device 602 to facilitate signaling (e.g., the signaling 634) to and/or from the wireless device 602 with other devices (e.g., the network device 618) according to corresponding RATs.

The wireless device 602 may include one or more antenna(s) 612 (e.g., one, two, four, or more). For embodiments with multiple antenna(s) 612, the wireless device 602 may leverage the spatial diversity of such multiple antenna(s) 612 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the wireless device 602 may be accomplished according to precoding (or digital beamforming) that is applied at the wireless device 602 that multiplexes the data streams across the antenna(s) 612 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the wireless device 602 may implement analog beamforming techniques, whereby phases of the signals sent by the antenna(s) 612 are relatively adjusted such that the (joint) transmission of the antenna(s) 612 can be directed (this is sometimes referred to as beam steering).

The wireless device 602 may include one or more interface(s) 614. The interface(s) 614 may be used to provide input to or output from the wireless device 602. For example, a wireless device 602 that is a UE may include interface(s) 614 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 610/antenna(s) 612 already described) that allow for communication between the UE and other devices and may operate according to known protocols (e.g., Wi-Fi®, Bluetooth®, and the like).

The wireless device 602 may include a scrambling module 616. The scrambling module 616 may be implemented via hardware, software, or combinations thereof. For example, the scrambling module 616 may be implemented as a processor, circuit, and/or instructions 608 stored in the memory 606 and executed by the processor(s) 604. In some examples, the scrambling module 616 may be integrated within the processor(s) 604 and/or the transceiver(s) 610. For example, the scrambling module 616 may be implemented by a combination of software components (e.g., executed by a DSP or a general processor) and hardware components (e.g., logic gates and circuitry) within the processor(s) 604 or the transceiver(s) 610.

The scrambling module 616 may be used for various aspects of the present disclosure, for example, aspects of FIG. 3.

The network device 618 may include one or more processor(s) 620. The processor(s) 620 may execute instructions such that various operations of the network device 618 are performed, as described herein. The processor(s) 620 may include one or more baseband processors implemented using, for example, a CPU, a DSP, an ASIC, a controller, an FPGA device, another hardware device, a firmware device, or any combination thereof configured to perform the operations described herein.

The network device 618 may include a memory 622. The memory 622 may be a non-transitory computer-readable storage medium that stores instructions 624 (which may include, for example, the instructions being executed by the processor(s) 620). The instructions 624 may also be referred to as program code or a computer program. The memory 622 may also store data used by, and results computed by, the processor(s) 620.

The network device 618 may include one or more transceiver(s) 626 that may include RF transmitter and/or receiver circuitry that use the antenna(s) 628 of the network device 618 to facilitate signaling (e.g., the signaling 634) to and/or from the network device 618 with other devices (e.g., the wireless device 602) according to corresponding RATs.

The network device 618 may include one or more antenna(s) 628 (e.g., one, two, four, or more). In embodiments having multiple antenna(s) 628, the network device 618 may perform MIMO, digital beamforming, analog beamforming, beam steering, etc., as has been described.

The network device 618 may include one or more interface(s) 630. The interface(s) 630 may be used to provide input to or output from the network device 618. For example, a network device 618 that is a base station may include interface(s) 630 made up of transmitters, receivers, and other circuitry (e.g., other than the transceiver(s) 626/antenna(s) 628 already described) that enables the base station to communicate with other equipment in a core network, and/or that enables the base station to communicate with external networks, computers, databases, and the like for purposes of operations, administration, and maintenance of the base station or other equipment operably connected thereto.

The network device 618 may include a descrambling module 632. The descrambling module 632 may be implemented via hardware, software, or combinations thereof. For example, the descrambling module 632 may be implemented as a processor, circuit, and/or instructions 624 stored in the memory 622 and executed by the processor(s) 620. In some examples, the descrambling module 632 may be integrated within the processor(s) 620 and/or the transceiver(s) 626. For example, the descrambling module 632 may be implemented by a combination of software components (e.g., executed by a DSP or a general processor) and hardware components (e.g., logic gates and circuitry) within the processor(s) 620 or the transceiver(s) 626.

The descrambling module 632 may be used for various aspects of the present disclosure, for example, aspects of FIG. 4.

Exemplary methods, apparatus, computer-readable media, and baseband processors are set out in the following items.

1. A method for a user equipment (UE) configured to use at least one of a first codeword and a second codeword for uplink communication with a base station, the method comprising:

determining whether to enable or disable the second codeword for a physical uplink shared channel (PUSCH) transmission;

in response to determining to disable the second codeword, transmitting the PUSCH transmission comprising the first codeword to the base station; and

in response to determining to enable the second codeword, transmitting the PUSCH transmission comprising the first codeword and the second codeword to the base station.

2. The method of item 1, wherein determining whether to enable or disable the second codeword comprises, in response to determining that the PUSCH transmission comprises a MsgA in 2-Step random access channel (RACH) procedure, disabling the second codeword.

3. The method of item 1 or 2, wherein the first codeword is scrambled with a PUSCH scrambling sequence initialized using a first codeword index value and the second codeword is scrambled with the PUSCH scrambling sequence initialized using a second codeword index value.

4. The method of item 3, wherein the PUSCH scrambling sequence comprises $c^{(q)}(i)$,

wherein (q) is a codeword index where q = 0 is the first codeword index value associated with the first codeword and q = 1 is the second codeword index value associated with the second codeword,

wherein (i) is a bit index ranging from zero to a number of bits in the first codeword or the second codeword, and

wherein the PUSCH scrambling sequence is initialized by an initial scrambling code $c_{init}$ based on:

a radio network temporary identifier $n_{RNTI}$ of the UE associated with the PUSCH transmission; and

an identity $n_{ID}$ comprising a cell identity or a higher layer parameter *dataScramblingIdentityPUSCH* in a PUSCH configuration information element (IE) from the base station.

5. The method of item 4, wherein $c_{init} = n_{RNTI} \cdot 2^{15} + q \cdot 2^{14} + n_{ID}$,

wherein for the first codeword, q = 0 and the PUSCH scrambling sequence is initiated by $c_{init} = n_{RNTI} \cdot 2^{15} + n_{ID}$, and

wherein for the second codeword, q = 1 and the PUSCH scrambling sequence is initiated by $c_{init} = n_{RNTI} \cdot 2^{15} + 2^{14} + n_{ID}$.

6. The method of item 4, wherein $c_{init} = n_{RNTI} \cdot 2^{15} + q \cdot 2^{10} + n_{ID}$,

wherein for the first codeword, q = 0 and the PUSCH scrambling sequence is initiated by $c_{init} = n_{RNTI} \cdot 2^{15} + n_{ID}$, and

wherein for the second codeword, q = 1 and the PUSCH scrambling sequence is initiated by $c_{init} = n_{RNTI} \cdot 2^{15} + 2^{10} + n_{ID}$.

7. The method of any preceding item, wherein the first codeword and the second codeword are scrambled with a PUSCH scrambling sequence comprising $c^{(q)}(i)$, wherein (q) is a codeword index where q = 0 is a first codeword index value associated with the first codeword and q = 1 is a second codeword index value associated with the second codeword,

wherein (i) is a bit index ranging from zero to a number of bits in the first codeword or the second codeword, and wherein the PUSCH scrambling sequence is initialized by an initial scrambling code comprising $c_{init} = n_{RNTI} \cdot 2^{15} + n_{ID}$, where $n_{RNTI}$ is a radio network temporary identifier (RNTI) of the UE associated with the PUSCH transmission, and where:

for the first codeword, $n_{ID}$ comprises a first higher layer parameter *dataScramblingIdentityPUSCH* in a PUSCH configuration information element (IE) from the base station,

for the second codeword, $n_{ID}$ comprises a second higher layer parameter *dataScramblingIdentityPUSCH* in the PUSCH configuration IE from the base station, wherein the first higher layer parameter *dataScramblingIdentityPUSCH* is configured independently from the second higher layer parameter *dataScramblingIdentityPUSCH*.

8. The method of any preceding item, wherein the first codeword and the second codeword are scrambled with a PUSCH scrambling sequence comprising $c^{(q)}(i)$,

wherein (q) is a codeword index where q = 0 is a first codeword index value associated with the first codeword and q = 1 is a second codeword index value associated with the second codeword,

wherein (i) is a bit index ranging from zero to a number of bits in the first codeword or the second codeword,

wherein the PUSCH scrambling sequence for both the first codeword and the second codeword is initialized by an initial scrambling code comprising $c_{init} = n_{RNTI} \cdot 2^{15} + n_{ID}$, where $n_{RNTI}$ is a radio network temporary identifier (RNTI) of the UE associated with the PUSCH transmission, and

where $n_{ID}$ comprising a cell identity or a higher layer parameter *dataScramblingIdentityPUSCH* in a PUSCH configuration information element (IE) from the base station.

9. The method of any preceding item, further comprising, when encoding 1-bit information or 2-bit information for channel coding, selecting between either the first codeword or the second codeword to multiplex uplink control information (UCI) on the PUSCH transmission.

10. The method of item 9, wherein selecting between either the first codeword or the second codeword is based on a largest modulation coding scheme (MCS) used for the first codeword or the second codeword.

11. The method of item 9 or 10, wherein selecting between either the first codeword or the second codeword comprises being preconfigured to select the first codeword.

12. The method of any preceding item, further comprising, when encoding 1-bit information for channel coding, multiplexing a same 1-bit uplink control information (UCI) on both the first codeword and the second codeword.

13. The method of any preceding item, further comprising, when encoding 2-bit information for channel coding, multiplexing a same 2-bit uplink control information (UCI) on both the first codeword and the second codeword.

14. The method of any preceding item, further comprising, when encoding 2-bit information for channel coding, multiplexing a first bit of uplink control information (UCI) on the first codeword and multiplexing a second bit of the UCI on the second codeword.

15. The method of item 14, further comprising:

for the first codeword, using a 1-bit information encoding table to encode the first bit; and

for the second codeword, using the same 1-bit information encoding table to encode the second bit.

16. The method of any preceding item, wherein determining whether to enable or disable the second codeword is based on a number of PUSCH layers scheduled by scheduling downlink control information (DCI) or a radio resource control (RRC) signal for Type I configured grant (CG) PUSCH.

17. The method of item 16, wherein for codebook based PUSCH operation, the number of scheduled PUSCH layers is scheduled by a precoding information and number of layers field in the scheduling DCI or a precodingAndNumberOfLayers field in the RRC signal; and
wherein for non-codebook based PUSCH operation, the number of scheduled PUSCH layers is scheduled by a sounding reference signal (SRS) resource indicator field in the scheduling DCI or an srs-ResourceIndicator field in the RRC signal.

18. The method of item 16 or 17, further comprising:

when the number of PUSCH layers is less than or equal to four, disabling the second codeword; and
when the number of PUSCH layers is greater than four, enabling the second codeword.

19. The method of any preceding item, wherein determining whether to enable or disable the second codeword is based on a 1-bit field communicated from the base station to the UE.

20. The method of item 19, wherein for dynamic grant (DG) PUSCH or Type II configured grant (CG) PUSCH, downlink control information (DCI) format 0_1 or DCI format 0_2 includes the 1-bit field; and
wherein for Type I CG PUSCH, a configured grant configuration message in a radio resource control (RRC) signal includes the 1-bit field.

21. The method of any preceding item, wherein determining whether to enable or disable the second codeword is based on at least one of:

a modulation and coding scheme (MCS) index for the second codeword; and
a redundancy version (RV) for the second codeword.

22. A method for a base station to process a physical uplink shared channel (PUSCH) transmission received from a user equipment (UE), the method comprising:
in response to determining that the PUSCH transmission includes both a first codeword and a second codeword:

generating a first PUSCH scrambling sequence corresponding to the first codeword;
generating a second PUSCH scrambling sequence corresponding to the second codeword;
descrambling the first codeword using the first PUSCH scrambling sequence; and
descrambling the second codeword using the second PUSCH scrambling sequence.

23. The method of item 22, further comprising, in response to determining that the PUSCH transmission comprises a MsgA in 2-Step random access channel (RACH) procedure, determining that the second codeword is disabled.

24. The method of item 22 or 23, wherein the first PUSCH scrambling sequence is initialized using a first codeword index value and the second PUSCH scrambling sequence is initialized using a second codeword index value.

25. The method of item 24, wherein the first PUSCH scrambling sequence and the second PUSCH scrambling sequence are based on $c^{(q)}(i)$,

wherein (q) is a codeword index where q = 0 is the first codeword index value associated with the first codeword and q = 1 is the second codeword index value associated with the second codeword,

wherein (i) is a bit index ranging from zero to a number of bits in the first codeword or the second codeword, and

wherein the first PUSCH scrambling sequence and the second PUSCH scrambling sequence are initialized by an initial scrambling code $c_{init}$ based on:

a radio network temporary identifier $n_{RNTI}$ of the UE associated with the PUSCH transmission; and

an identity $n_{ID}$ comprising a cell identity or a higher layer parameter *dataScramblingIdentityPUSCH* in a PUSCH configuration information element (IE) from the base station to the UE.

26. The method of item 25, wherein $c_{init} = n_{RNTI} \cdot 2^{15} + q \cdot 2^{14} + n_{ID}$,

wherein for the first codeword, q = 0 and the first PUSCH scrambling sequence is initiated by $c_{init} = n_{RNTI} \cdot 2^{15} + n_{ID}$, and

wherein for the second codeword, q = 1 and the second PUSCH scrambling sequence is initiated by $c_{init} = n_{RNTI} \cdot 2^{15} + 2^{14} + n_{ID}$.

27. The method of item 25, wherein $c_{init} = n_{RNTI} \cdot 2^{15} + q \cdot 2^{10} + n_{ID}$,

wherein for the first codeword, $q = 0$ and the first PUSCH scrambling sequence is initiated by $c_{init} = n_{RNTI} \cdot 2^{15} + n_{ID}$, and

wherein for the second codeword, $q = 1$ and the second PUSCH scrambling sequence is initiated by $c_{init} = n_{RNTI} \cdot 2^{15} + 2^{10} + n_{ID}$.

28. The method of any of items 22-27, wherein the first PUSCH scrambling sequence and the second PUSCH scrambling sequence are based on $c^{(q)}(i)$,

wherein (q) is a codeword index where $q = 0$ is a first codeword index value associated with the first codeword and $q = 1$ is a second codeword index value associated with the second codeword,

wherein (i) is a bit index ranging from zero to a number of bits in the first codeword or the second codeword, and

wherein the first PUSCH scrambling sequence and the second PUSCH scrambling sequence are initialized by an initial scrambling code comprising $c_{init} = n_{RNTI} \cdot 2^{15} + n_{ID}$,

where $n_{RNTI}$ is a radio network temporary identifier (RNTI) of the UE associated with the PUSCH transmission, and where:

for the first codeword, $n_{ID}$ comprises a first higher layer parameter *dataScramblingIdentityPUSCH* in a PUSCH configuration information element (IE) from the base station to the UE,

for the second codeword, $n_{ID}$ comprises a second higher layer parameter *dataScramblingIdentityPUSCH* in the PUSCH configuration IE from the base station to the UE, wherein the first higher layer parameter *dataScramblingIdentityPUSCH* is configured independently from the second higher layer parameter *dataScramblingIdentityPUSCH*.

29. The method of any of items 22-28, wherein the first PUSCH scrambling sequence and the second PUSCH scrambling sequence are based on $c^{(q)}(i)$,

wherein (q) is a codeword index where $q = 0$ is a first codeword index value associated with the first codeword and $q = 1$ is a second codeword index value associated with the second codeword,

wherein (i) is a bit index ranging from zero to a number of bits in the first codeword or the second codeword,

wherein the first PUSCH scrambling sequence and the second PUSCH scrambling sequence are both initialized by an initial scrambling code comprising $c_{init} = n_{RNTI} \cdot 2^{15} + n_{ID}$,

where $n_{RNTI}$ is a radio network temporary identifier (RNTI) of the UE associated with the PUSCH transmission, and

where $n_{ID}$ comprising a cell identity or a higher layer parameter *dataScramblingIdentityPUSCH* in a PUSCH configuration information element (IE) from the base station to the UE.

30. The method of any of items 22-29, further comprising, for channel coding using encoding of 1-bit information or 2-bit information, selecting between either the first codeword or the second codeword to demultiplex corresponding uplink control information (UCI) from the PUSCH transmission.

31. The method of item 30, wherein selecting between either the first codeword or the second codeword is based on a largest modulation coding scheme (MCS) used for the first codeword or the second codeword.

32. The method of item 30, wherein selecting between either the first codeword or the second codeword comprises being preconfigured to select the first codeword.

33. The method of any of items 22-32, further comprising, for channel coding using encoding of 1-bit information, demultiplexing a same 1-bit uplink control information (UCI) from both the first codeword and the second codeword.

34. The method of any of items 22-33, further comprising, for channel coding using encoding of 2-bit information, demultiplexing a same 2-bit uplink control information (UCI) from both the first codeword and the second codeword.

35. The method of any of items 22-34, further comprising, for channel coding using encoding of 2-bit information, demultiplexing a first bit of uplink control information (UCI) from the first codeword and demultiplexing a second bit of the UCI from the second codeword.

36. The method of item 35, wherein for the first codeword, the first bit is encoded according to a 1-bit information encoding table; and

wherein for the second codeword, the second bit is encoded according to the same 1-bit information encoding table.

37. The method of any of items 22-36, further comprising determining that the PUSCH transmission includes both the first codeword and the second codeword based on a number of PUSCH layers scheduled by the base station to the UE in scheduling downlink control information (DCI) or a radio resource control (RRC) signal for Type I configured grant (CG) PUSCH.

38. The method of item 37, wherein for codebook based PUSCH operation, the number of scheduled PUSCH layers is scheduled by a precoding information and number of layers field in the scheduling DCI or a precodingAndNumberOfLayers field in the RRC signal; and

wherein for non-codebook based PUSCH operation, the number of scheduled PUSCH layers is scheduled by a sounding reference signal (SRS) resource indicator field in the scheduling DCI or an srs-ResourceIndicator field in the RRC signal.

39. The method of item 37 or 38, further comprising determining that the PUSCH transmission includes both the first codeword and the second codeword when the number of PUSCH layers is greater than four.

40. The method of any of items 22-39, further comprising transmitting a 1-bit field, from the base station to the UE, to indicate that the UE is to include both the first codeword and the second codeword in the PUSCH transmission.

41. The method of item 40, wherein for dynamic grant (DG) PUSCH or Type II configured grant (CG) PUSCH, including the 1-bit field in downlink control information (DCI) format 0_1 or DCI format 0_2 includes the 1-bit field; and

wherein for Type I CG PUSCH, including the 1-bit field in a configured grant configuration message in a radio resource control (RRC) signal.

42. The method of any of items 22-41, further comprising, to indicate that the UE is to include both the first codeword and the second codeword in the PUSCH transmission, transmitting at least one of a modulation and coding scheme (MCS) index for the second codeword and a redundancy version (RV) for the second codeword to the UE.

43. An apparatus comprising means to perform the method of any of item 1 to item 42.

44. A computer-readable media comprising instructions to cause an electronic device, upon execution of the instructions by one or more processors of the electronic device, to perform the method of any of item 1 to item 42.

45. An apparatus comprising logic, modules, or circuitry to perform the method of any of item 1 to item 42.

46. A baseband processor for a user equipment (UE) that is configured to perform the method of any of item 1 to item 21.

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

**Claims**

1. A method for a user equipment (UE) configured to use at least one of a first codeword and a second codeword for uplink communication with a base station, the method comprising:

   determining whether to enable or disable the second codeword for a physical uplink shared channel (PUSCH) transmission;
   in response to determining to disable the second codeword, transmitting the PUSCH transmission comprising the first codeword to the base station; and
   in response to determining to enable the second codeword, transmitting the PUSCH transmission comprising the first codeword and the second codeword to the base station,
   wherein the first codeword is scrambled with a PUSCH scrambling sequence initialized using a first codeword index value and the second codeword is scrambled with the PUSCH scrambling sequence initialized using a second codeword index value.

2. The method of claim 1, wherein the PUSCH scrambling sequence comprises $c^{(q)}(i)$,

   wherein (q) is a codeword index where q = 0 is the first codeword index value associated with the first codeword and q = 1 is the second codeword index value associated with the second codeword,
   wherein (i) is a bit index ranging from zero to a number of bits in the first codeword or the second codeword, and
   wherein the PUSCH scrambling sequence is initialized by an initial scrambling code $c_{init}$ based on:

      a radio network temporary identifier $n_{RNTI}$ of the UE associated with the PUSCH transmission; and
      an identity $n_{ID}$ comprising a cell identity or a higher layer parameter *dataScramblingIdentityPUSCH* in a PUSCH configuration information element (IE) from the base station.

3. The method of claim 2, wherein $c_{init} = n_{RNTI} \cdot 2^{15} + q \cdot 2^{14} + n_{ID}$,

   wherein for the first codeword, q = 0 and the PUSCH scrambling sequence is initiated by $c_{init} = n_{RNTI} \cdot 2^{15} + n_{ID}$, and
   wherein for the second codeword, q = 1 and the PUSCH scrambling sequence is initiated by $c_{init} = n_{RNTI} \cdot 2^{15} + 2^{14} + n_{ID}$.

4. The method of any preceding claim, wherein the first codeword and the second codeword are scrambled with a PUSCH scrambling sequence comprising $c^{(q)}(i)$,

wherein (q) is a codeword index where q = 0 is a first codeword index value associated with the first codeword and q = 1 is a second codeword index value associated with the second codeword,

wherein (i) is a bit index ranging from zero to a number of bits in the first codeword or the second codeword, and wherein the PUSCH scrambling sequence is initialized by an initial scrambling code comprising $c_{init} = n_{RNTI} \cdot 2^{15} + n_{ID}$, where $n_{RNTI}$ is a radio network temporary identifier (RNTI) of the UE associated with the PUSCH transmission, and where:

for the first codeword, $n_{ID}$ comprises a first higher layer parameter *dataScramblingIdentityPUSCH* in a PUSCH configuration information element (IE) from the base station,

for the second codeword, $n_{ID}$ comprises a second higher layer parameter *dataScramblingIdentityPUSCH* in the PUSCH configuration IE from the base station, wherein the first higher layer parameter *dataScramblingIdentityPUSCH* is configured independently from the second higher layer parameter *dataScramblingIdentityPUSCH*.

5. The method of any preceding claim, wherein the first codeword and the second codeword are scrambled with a PUSCH scrambling sequence comprising $c^{(q)}(i)$,

wherein (q) is a codeword index where q = 0 is a first codeword index value associated with the first codeword and q = 1 is a second codeword index value associated with the second codeword,

wherein (i) is a bit index ranging from zero to a number of bits in the first codeword or the second codeword, wherein the PUSCH scrambling sequence for both the first codeword and the second codeword is initialized by an initial scrambling code comprising $c_{init} = n_{RNTI} \cdot 2^{15} + n_{ID}$,

where $n_{RNTI}$ is a radio network temporary identifier (RNTI) of the UE associated with the PUSCH transmission, and

where $n_{ID}$ comprising a cell identity or a higher layer parameter *dataScramblingIdentityPUSCH* in a PUSCH configuration information element (IE) from the base station.

6. A method for a base station to process a physical uplink shared channel (PUSCH) transmission received from a user equipment (UE), the method comprising:

in response to determining that the PUSCH transmission includes both a first codeword and a second codeword:

generating a first PUSCH scrambling sequence corresponding to the first codeword;
generating a second PUSCH scrambling sequence corresponding to the second codeword;
descrambling the first codeword using the first PUSCH scrambling sequence; and
descrambling the second codeword using the second PUSCH scrambling sequence.

7. The method of claim 6, wherein the first PUSCH scrambling sequence is initialized using a first codeword index value and the second PUSCH scrambling sequence is initialized using a second codeword index value, and wherein the first PUSCH scrambling sequence and the second PUSCH scrambling sequence are based on $c^{(q)}(i)$,

wherein (q) is a codeword index where q = 0 is the first codeword index value associated with the first codeword and q = 1 is the second codeword index value associated with the second codeword,

wherein (i) is a bit index ranging from zero to a number of bits in the first codeword or the second codeword, and wherein the first PUSCH scrambling sequence and the second PUSCH scrambling sequence are initialized by an initial scrambling code $c_{init}$ based on:

a radio network temporary identifier $n_{RNTI}$ of the UE associated with the PUSCH transmission; and
an identity $n_{ID}$ comprising a cell identity or a higher layer parameter *dataScramblingIdentityPUSCH* in a PUSCH configuration information element (IE) from the base station to the UE.

8. The method of claim 7, wherein $c_{init} = n_{RNTI} \cdot 2^{15} + q \cdot 2^{14} + n_{ID}$,

wherein for the first codeword, q = 0 and the first PUSCH scrambling sequence is initiated by $c_{init} = n_{RNTI} \cdot 2^{15} + n_{ID}$, and

wherein for the second codeword, q = 1 and the second PUSCH scrambling sequence is initiated by $c_{init} = n_{RNTI} \cdot 2^{15} + 2^{14} + n_{ID}$.

9. The method of any of claims 6-8, further comprising, for channel coding using encoding of 1-bit information or 2-bit information, selecting between either the first codeword or the second codeword to demultiplex corresponding uplink control information (UCI) from the PUSCH transmission,

wherein selecting between either the first codeword or the second codeword is based on a largest modulation coding scheme (MCS) used for the first codeword or the second codeword, or
wherein selecting between either the first codeword or the second codeword comprises being preconfigured to select the first codeword.

10. The method of any of claims 6-9, further comprising:

for channel coding using encoding of 1-bit information, demultiplexing a same 1-bit uplink control information (UCI) from both the first codeword and the second codeword; or
for channel coding using encoding of 2-bit information, demultiplexing a same 2-bit uplink control information (UCI) from both the first codeword and the second codeword; or
for channel coding using encoding of 2-bit information, demultiplexing a first bit of uplink control information (UCI) from the first codeword and demultiplexing a second bit of the UCI from the second codeword, wherein for the first codeword the first bit is encoded according to a 1-bit information encoding table, and wherein for the second codeword the second bit is encoded according to the same 1-bit information encoding table.

11. The method of any of claims 6-10, further comprising determining that the PUSCH transmission includes both the first codeword and the second codeword based on a number of PUSCH layers scheduled by the base station to the UE in scheduling downlink control information (DCI) or a radio resource control (RRC) signal for Type I configured grant (CG) PUSCH.

12. The method of claim 11, wherein for codebook based PUSCH operation, the number of scheduled PUSCH layers is scheduled by a precoding information and number of layers field in the scheduling DCI or a precodingAndNumberOfLayers field in the RRC signal; and
wherein for non-codebook based PUSCH operation, the number of scheduled PUSCH layers is scheduled by a sounding reference signal (SRS) resource indicator field in the scheduling DCI or an srs-ResourceIndicator field in the RRC signal.

13. The method of claim 12, further comprising determining that the PUSCH transmission includes both the first codeword and the second codeword when the number of PUSCH layers is greater than four.

14. An apparatus comprising means to perform the method of any of claim 1 to claim 13.

15. A computer-readable media comprising instructions to cause an electronic device, upon execution of the instructions by one or more processors of the electronic device, to perform the method of any of claim 1 to claim 13.

| $Q_m$ | Encoded bits $d_0, d_1, d_2, \ldots\ldots, d_{N-1}$ |
|---|---|
| 1 | $[\ c_0\ ]$ |
| 2 | $[\ c_0\ y]$ |
| 4 | $[\ c_0\ y\ x\ x\ ]$ |
| 6 | $[\ c_0\ y\ x\ x\ x\ x\ ]$ |
| 8 | $[\ c_0\ y\ x\ x\ x\ x\ x\ x\ ]$ |

**FIG. 1**

| $Q_m$ | Encoded bits $d_0, d_1, d_2, \ldots\ldots, d_{N-1}$ |
|---|---|
| 1 | $[\, c_0 \, c_1 \, c_2 \,]$ |
| 2 | $[\, c_0 \, c_1 \, c_2 \, c_0 \, c_1 \, c_2 \,]$ |
| 4 | $[\, c_0 \, c_1 \, X \, X \, c_2 \, c_0 \, X \, X \, c_1 \, c_2 \, X \, X \,]$ |
| 6 | $[\, c_0 \, c_1 \, X \, X \, X \, X \, c_2 \, c_0 \, X \, X \, X \, X \, c_1 \, c_2 \, X \, X \, X \, X \,]$ |
| 8 | $[\, c_0 \, c_1 \, X \, X \, X \, X \, X \, X \, c_2 \, c_0 \, X \, X \, X \, X \, X \, X \, c_1 \, c_2 \, X \, X \, X \, X \, X \, X \,]$ |

**FIG. 2**

EP 4 746 578 A2

300

302

Determine whether to enable or disable a second codeword for a physical uplink shared channel (PUSCH) transmission

304

In response to determining to disable the second codeword, transmit the PUSCH transmission comprising the first codeword to the base station

306

In response to determining to enable the second codeword, transmit the PUSCH transmission comprising the first codeword and the second codeword to the base station

**FIG. 3**

400

402

Determining that a PUSCH transmission includes both the first codeword and the second codeword

404

Generate a first PUSCH scrambling sequence corresponding to the first codeword

406

Generate a second PUSCH scrambling sequence corresponding to the second codeword

408

Descramble the first codeword using the first PUSCH scrambling sequence

410

Descramble the second codeword using the second PUSCH scrambling sequence

**FIG. 4**

**FIG. 5**

**FIG. 6**